# EUROPEAN PATENT SPECIFICATION

(11) **EP 4 455 463 B1**
(45) Date of publication and mention of the grant of the patent: **03.12.2025**
(21) Application number: 23169367.2
(22) Date of filing: 24.04.2023
(51) Int. Cl.: F01N 3/20

(54) **HEATING DEVICE**
HEIZEINRICHTUNG
DISPOSITIF DE CHAUFFAGE

(43) Date of publication of application: 30.10.2024
(73) Proprietor: Hidria d.o.o., 5220 Tolmin (SI)
(72) Inventor: ZAGAR, Uros, Tolmin (SI)
(74) Representative: Herrmann, Jochen

(56) References cited:
- EP-A1- 3 686 405
- WO-A1-2017/151975
- WO-A1-2022/115346
- US-A1- 2018 119 591

## Description

The invention relates to a heating device for heating a gas flow, in particular an exhaust gas flow, comprising a heating element adapted to enable heat exchange to the gas flow, wherein the heating element comprises at least one resistance element, wherein the resistance element comprises a plate-shaped, in particular strip-shaped base body, wherein the base body comprises opposite first and second surfaces, each extending in both a longitudinal and transverse direction of the base body, and opposite third and fourth surfaces connecting the first and second surfaces and each having a smaller surface area than each of the first and second surfaces, wherein the heating element comprises connection areas that are connectable to a source of electrical power, such that the heating element can be heated up through resistive heating.

Exhaust systems of internal combustion engines, particularly engines of vehicles such as automobiles, typically include one or more devices or systems for reducing pollutants produced during combustion, such as catalytic converters. Catalytic converters are capable of at least partially converting harmful components such as hydrocarbons, carbon monoxide, and nitrogen oxides from the exhaust stream into less harmful products. In recent years, exhaust aftertreatment systems for diesel engines have increasingly been equipped with catalytic converters that provide selective catalytic reduction (SCR) of nitrogen oxides using a reducing agent such as ammonia.

However, such systems or devices for converting harmful exhaust gas components generally perform satisfactorily only within a certain temperature range. In particular, a minimum temperature of a catalyst needs to be reached to achieve satisfactory catalytic conversion. During the engine warm-up phase after a cold start, exhaust gas temperatures tend to be too low to reliably heat the catalyst to its operating temperature range. Further, during operation of a vehicle, exhaust gas temperatures may vary and fall below temperatures sufficient to adequately heat up the catalyst. Exhaust gas temperatures may drop, for example, in case the engine is designed for fuel cutoff during coasting in gear, or simply when the engine is operating at low power, such as during cruising without climbing and/or accelerating, or when driving downhill. Low exhaust gas temperatures can be particularly challenging in hybrid vehicles, where the combustion engine operates only periodically and/or at low power.

Aiming to overcome the problem of insufficient temperature, heating devices have been developed capable of heating the exhaust gas flow upstream of exhaust gas treatment devices such as catalytic converters.

An electric heating device for placement within an exhaust gas system of an internal combustion engine is known from WO 2022/043207 A1 and US2018/119591A1. The heating device comprises a strip-shaped heating element that is bent into a meandering structure. At its longitudinal ends, the heating element is connected to electrical connectors enabling a connection to a power source, such that the heating element can be heated up by resistive heating.

The problem solved by the invention is to provide a heating device with improved heat transfer characteristics and increased service life.

The problem is solved in that in that the resistance element comprises at least one protrusion protruding from the first and/or the second surface of the base body in a direction of protrusion. Preferably, the resistance element may comprise multiple protrusions.

The direction of protrusion may be transverse to the longitudinal direction and/or the transverse direction, in particular perpendicular to the longitudinal direction and/or the transverse direction.

Generally, longitudinal directions and transverse directions of the base body may correspond to longitudinal directions and transverse directions of the resistance element and/or the heating element. As explained further below, the heating element may itself be designed to be wound up, coiled or bent. However, designations of direction, plane and area refer to the heating element and/or the resistance element(s) in its straight, in particular unwound, state, unless otherwise stated or evident from the context.

The first and/or second surfaces of the base body may preferably be flat. However, it is also conceivable that the first and/or second surfaces of the base body comprise a, preferably slight, curvature when viewed in a sectional view in a plane normal to the longitudinal direction. For example, the first surface may comprise a convex curvature and the second surface may comprise a concave curvature or vice versa. Of course, it is also conceivable that both surfaces are convex or concave.

The protrusion increases the surface area available for heat transfer between the gas flow and the resistance element, such that heat can more effectively be transferred from the resistance element to the gas flow.

Because heat transfer is enhanced between the resistance element and the gas flow, a desired increase in gas temperature may be achieved with a lower temperature of the resistance element. A lower temperature of the resistance element may increase service life as well as reliability of the heating element due to a reduction of the thermal load the resistance element needs to bear.

The heating element may be preferably arranged such that a main flow direction of the gas flow, which may be a bulk flow direction, may be at least partially aligned, in particular essentially parallel to the transverse direction of the base body of the resistance element. Consequently, the main flow direction may at least partially be incident on, i.e., at least have a component normal to, the additional surface area provided for heat transfer by the protrusion. Due to the incident orientation, this area of the protrusion may provide a significantly increased heat transfer per unit area compared to areas parallel to the main flow direction, such as, for example, the first and second surfaces of the base body.

This surface area of the protrusion on which the main flow direction is at least partially incident may be in addition to an area of the third surface, which third surface may be a side surface of the plate-shaped, in particular strip-shaped base body, and on which third surface the main flow direction thus may also be at least partially incident, in particular incident in a surface normal direction. In other words, the third surface may be an upstream surface of the base body. In this sense, the fourth surface arranged opposite of the third surface may be a downstream surface of the base body.

As stated above, the heating element may be arranged such that a main flow direction of the gas flow is essentially parallel to the transverse direction of the based body of the resistance element. However, it is also conceivable that the main flow direction is not parallel to the transverse direction, but at an angle thereto. That is, the base body may be inclined with respect to the main flow direction. In particular, an angle of inclination in this sense may be larger than 0° and at most 45°.

The heating element may comprise more than one resistance element, that may be arranged in parallel and extend along the longitudinal direction, and which may be spaced from one another in a direction perpendicular to the longitudinal direction and the transverse direction. In other words, the heating element may comprise parallel and stacked resistance elements.

The heating element and the resistance element(s) may itself/themselves be wound up, coiled or bent into an arrangement that enables a large length (along the longitudinal direction) of the heating element and/or the resistance element(s) to be provided in a given cross-section of the gas flow. Preferably, winding, coiling or bending of the heating element is provided about axes parallel to the transverse direction and/or parallel to the main flow direction. In this way, the at least partially incident orientation of the third surface and of the above-discussed at least partially incident areas of the protrusion may be preserved. For example, the heating element may be, at least in one region of the heating element, wound up, coiled or bent into an arrangement such that it follows a spiral shape, preferably a double spiral shape, or a meandering shape or any other shape that enables a compact arrangement of a large length of the heating element.

The cross-section of the gas flow may be given by the dimensions of a component of the exhaust system, for instance by an inlet cross-section of a housing of an exhaust gas treatment device such as a catalytic converter. It should be noted, however, that a heating device according to the invention need not necessarily be intended to be located directly upstream an exhaust gas treatment device, but may be intended to be, for example, located anywhere within a gas flow, in particular an exhaust gas flow, for example adjacent to an outlet of an engine.

Preferably, the heating element may be wound up in a spiral shape. In particular, the heating element may be wound up in a double spiral, wherein, starting from a first longitudinal end region toward a longitudinal central region of the heating element, the heating element may revolve around a first center point of a first spiral with decreasing distance (radius) from the first center point, and wherein, starting from the central region toward a second longitudinal end region of the heating element, the heating element may revolve around a second center point of a second spiral with increasing distance (radius) from the second center point, wherein the first and second spirals may have opposite directions of rotation. The first center point and/or the center point may be in the longitudinal central region of the heating element. In particular, the first and second center points may coincide.

In this context, an important advantage may be that, in addition or as an alternative to arranging the resistance element such that the area of the incident side of the base body (upstream side) is enlarged, for example by winding it up or bending it into a meandering arrangement, the incident area of the resistance element itself is enlarged by provision of protrusions protruding from the base body of the resistance element.

It may be envisaged that an arrangement as described above, i.e. a wound up, coiled or bent arrangement, in particular spiral, preferably double spiral arrangement, is achieved by the manufacturing process of the resistance element itself. For instance, if the resistance element is produced by a molding process, such as, for example, casting, or by an additive manufacturing process, such as, for example, 3D-printing, it may be molded or printed in the above-mentioned arrangement.

It is conceivable that the heating device comprises more than one heating element. In particular, at least two heating elements may be arranged following one another in the main flow direction.

The connection areas connectable to a source of electrical power may be located in the end regions of the heating element, such that a sufficient length of the heating element and the resistance element may be exposed to current flowing therethrough for resistive heating.

The source of electrical power may provide a voltage of preferably 48 V, alternatively 24 V or 12 V. It is also conceivable that the source of electrical power may provide a variable voltage, in particular that the voltage can vary in time, for example during a heating phase. The electrical power guided through the heating element and transformed to heat at a given voltage depends on the overall resistance of the heating element between its connection areas. The overall resistance in turn depends on the choice of material and the geometric design and dimensions of the heating element and/or the resistance element(s). Hence, the heating element may be designed according to the required heating power.

Depending on the design of the protrusion and the velocity of the gas flow, the protrusion may or may not introduce or increase turbulence in the gas flow in the area of the heating device. On the one hand, turbulence may enhance heat transfer between the resistance element and the gas flow. On the other hand, a pressure drop introduced by the heating device into the gas stream by flow resistance may be increased by introduction or increase of turbulence at the protrusion. Consequently, depending on the goal, e.g. desired heat transfer rate, target gas temperature, or target maximum pressure drop, and given flow conditions, e.g. gas flow velocity, inlet gas temperature, the design of the protrusion may be chosen accordingly. The design of the protrusion may refer to the dimensions and/or the shape of the protrusion.

The dimensions of the protrusion may refer to a protrusion height, a protrusion length, and/or a protrusion width.

A protrusion height may be measured between the surface the protrusion is protruding from and an outermost point of the protrusion in the direction of protrusion. The protrusion height may be significantly larger than the material thickness of the base body. In particular, the protrusion height may be at least two times the material thickness of the base body, preferably at least four times, more preferably at least six times, even more preferably at least eight times the material thickness of the base body.

The protrusion length may be measured between outermost points of the protrusion in the transverse direction. The protrusion length may also be significantly larger than the material thickness of the base body. In particular, the protrusion length may be at least five times the material thickness of the base body, preferably at least ten times, more preferably at least 15 times, even more preferably at least 20 times.

The protrusion width may be measured between outermost points of the protrusion in the longitudinal direction. The protrusion width may also be significantly larger than the material thickness of the base body. Preferably, the protrusion width corresponds to the protrusion length, while it may also differ therefrom. In any case, the protrusion width may preferably be at least five times the material thickness of the base body, more preferably at least 10 times, even more preferably at least 20 times.

The aforementioned material thickness of the base body may be measured in a region without a protrusion. The material thickness of the base body in a region without protrusion may be measured between the first surface and the second surface. Preferably, the material thickness may be equal to or less than 1.5 mm, preferably equal to or less than 1 mm, further preferably equal to or less than 0.3 mm. Further, the material thickness may preferably be at least 0,1 mm.

A further advantage of the protrusion is that mechanical stability of the resistance element may be increased. Mechanical stability may be of particular importance for the use in exhaust systems, where harsh operating conditions prevail, and where the resistance element may be exposed to vibrations. As the protrusion protrudes from the first and/or second surface, the area moment of inertia of the resistance element may be increased compared to that of the base body without the protrusion, whereby bending stiffness may be enhanced. Advantageously, this increase in bending stiffness needs not necessarily be accompanied by a significant increase in material use and/or weight of the resistance element.

The resistance element may be made from any alloy suitable for resistive heating, examples of which may be nickel-chromium and iron-chromium-aluminum based alloys. Preferably, the resistance element is made from Fe-Cr-Al or Ni-Cr alloys.

The above-described advantages of the protrusion may, in particular, be achieved without added material costs and with little manufacturing costs, if it is provided that the protrusion is integrally formed from the base body, and that the protrusion forms a depression which is set back from the surface opposite the surface from which the protrusion protrudes. In this way, a resistance element equipped with protrusions may not incorporate significantly more material compared to a base body without protrusions of the same longitudinal and transverse dimensions.

Because the overall mass of material of the resistance element can be kept low, operation dynamics of the heating element can be improved, because thermal inertia can be kept low due to a lower mass that needs to be heated up. Thus, the heating element may be heated up more quickly, and consequently gas temperatures that enable a sufficient operating temperature of a catalyst may be reached in a shorter time.

Particularly efficient manufacture may be achieved if the protrusion is formed from the base body by a forming process. In particular, the plate-shaped, preferably strip-shaped base body may be an ideal object for a sheet metal forming process. Preferable sheet metal forming processes may be embossing, more preferably drawing or deep drawing.

In the alternative, it is conceivable that the resistance element is produced by a molding process, such as, for example, casting, or by an additive manufacturing process, such as, for example, 3D-printing.

It may or may not result from these processes, in particular from forming processes, that a material thickness of the resistance element in the region of a protrusion is, at least in parts, smaller than a material thickness of the base body in a region without a protrusion, such that additional material needed for the provision of the protrusion, compared to a base body with the same longitudinal and lateral dimensions but without protrusion, is kept to a minimum, preferably to zero.

The material thickness of the resistance element in the region of a protrusion may be measured as a wall thickness of a wall segment of the protrusion. In particular, it may be measured between surfaces of the protrusion inside the depression to surfaces of the protrusion outside the depression.

The material thickness in the region of a protrusion may, at least in parts, be 5 % to 10 % less than the material thickness in a region without protrusion, in particular if the protrusion is formed by a forming process. However, in particular if the resistance element is produced by a molding or an additive manufacturing process, the material thickness in the region of a protrusion may be equal to the material thickness in a region without a protrusion.

According to a preferred variant of the invention, it may be provided that the protrusion comprises one or more wall sections projecting from the surface from which the protrusion protrudes, and in that the one or more wall sections form an at least partially perimetral wall of the protrusion. A transition from the surface to the wall sections may be provided with a transitional section, which may comprise a radius and/or a chamfer.

The wall sections may project from the surface in the direction of protrusion or they may be inclined to the direction of protrusion, which may or may not be perpendicular to the surface. An inclined direction of projection of the wall section from the surface may provide reduced flow resistance compared to a wall section rising perpendicularly to the surface. In particular, an angle at which the wall section rises form the respective surface the protrusion is protruding from may be between 25° and 160°. A smaller angle may refer to a less steep incline of the rising wall relative to the respective surface the protrusion is protruding from. A smaller angle may provide less disturbance to the gas flow and may relate to a lower pressure drop over the heating element. If an angle larger than 90° is provided, the wall section may overhang the base body in a direction parallel to the surface the protrusion is protruding from. In preferred embodiments, however, the angle may be between 25° degrees and 90°. Such angles may be more easily manufactured using forming processes. For instance, an angle may be at a maximum 70°, preferably at a maximum 60°, further preferably at a maximum 45°, further preferably at a maximum 30°.

It is also conceivable that the wall sections may comprise a convex or concave shape viewed in a plane which is parallel to the direction of protrusion. In particular, the convex or concave shape may follow the shape of a circular or elliptic arc. In this case an angle of a tangent on the wall section may vary along the wall section and may span angles from 160° to 0°, preferably from 90° to 0°. In this context, the protrusion may be an at least partially spherical protrusion and/or an at least partially ellipsoidal protrusion. It is also conceivable that the wall sections may comprise one or more steps viewed in a plane which is parallel to the direction of protrusion, thus forming an at least partially stepped cone.

The at least partially perimetral wall may be formed at least on a side of the protrusion facing against the transverse direction. This side of the protrusion may thus face against the main flow direction and may face toward the third surface, which third surface may be an upstream surface. Thus, the protrusion may be provided with an upstream facing perimetral wall.

Additionally or alternatively, the at least partially perimetral wall may be formed at least on a side of the protrusion facing in the transverse direction. This side of the protrusion may thus face in the main flow direction and may face toward the fourth surface, which may be a downstream surface. Thus, the protrusion may be provided with a downstream facing perimetral wall.

Further additionally or alternatively, the at least partially perimetral wall may be formed at least on a side of the protrusion facing in the longitudinal direction and/or at least on a side of the protrusion facing against the longitudinal direction.

In a preferred embodiment, the protrusion comprises a partially perimetral wall formed on the side facing the transverse direction.

An a more preferred embodiment, the protrusion comprises a partially perimetral wall formed on the side facing the transverse direction and on both sides facing in and against the longitudinal direction.

In an even more preferred embodiment, the protrusion comprises a fully perimetral wall formed on all sides facing in and against the transverse direction and facing in and against the longitudinal direction.

An aerodynamically efficient and at the same time easily manufacturable design of the protrusion may be achieved in that the at least partially perimetral wall of the protrusion comprises a side wall section which follows the form of a truncated cone, wherein a cross-sectional area (parallel to the basis) of the truncated cone decreases in the direction of protrusion. In this context, following the form of a cone does not necessarily mean a complete perimetral coverage of the base shape of the cone. Rather, only a segment of the base shape of the cone may be covered by the side wall section. In other words, the side wall section may form a fully perimetral wall, be a part of a fully perimetral wall, form a partially perimetral wall or be a part of a partially perimetral wall. Further, the base of a cone need not be restricted to a circle but may rather comprise any shape such as an ellipse or a polygon, in particular a rectangle or triangle.

Additionally or alternatively, it may be provided that the at least partially perimetral wall of the protrusion comprises at least two side wall sections which converge to one another in the transverse direction to form an edge, which edge forms a trailing edge terminating the protrusion in the transverse direction. This may provide for a streamlined shape of the protrusion and thus reduce pressure drop over the heating element.

It may additionally or alternatively be provided that the at least partially perimetral wall of the protrusion comprises at least two side wall sections which converge to one another against the transverse direction to form an edge, which edge forms a leading edge terminating the protrusion against the transverse direction.

The trailing edge and/or the leading edge may be rounded or chamfered to reduce disturbance of the gas flow.

In a particularly advantageous embodiment, the protrusion may comprise a perimetral wall that is formed by a side wall section facing against the transverse direction that partially follows the form of a truncated cone as described above, preferably with a circular or elliptic base shape, and connected thereto two side wall sections which converge to one another in the transverse direction to form a trailing edge. In this way, a protrusion is achieved that is particularly streamlined. Such a shape of the protrusion may be referred to as a droplet shape.

According to a preferred variant of the invention, it may be provided that the one or more wall sections comprise a top wall section connected to the at least partially perimetral wall of the protrusion, which top wall section terminates the protrusion in the direction of protrusion. The top wall section may preferably be parallel to the surface of the base body. However, it may also be inclined. In particular, the top wall section may be a flat section. It is, however, also conceivable, that the top wall section may comprise a convex or concave shape. In any case, the connection of the top wall section to the wall section may comprise a transitional section, which may comprise a radius and/or a chamfer.

In a preferred embodiment, the protrusion may comprise a fully perimetral wall and a top wall section connected thereto. In this way, the protrusion forms a closed shape at least with respect to the surface it is protruding from. Due to the closed shape, disturbance of the gas flow may be minimized. Such a closed shape may, for example, follow the shape of a cone, a truncated cone, a spherical dome, an ellipsoid dome and/or a polygon such as a tetrahedron, a hexahedron, in particular a cuboid, more particularly a cube.

According to a variant of the invention it is proposed that the resistance element comprises at least one protrusion protruding from the first surface and at least one protrusion protruding from the second surface. Preferably, the resistance element comprises multiple protrusions which, in the longitudinal direction, alternatingly protrude from the first and second surfaces. In this way, multiple protrusions may be arranged along the longitudinal direction, but protrusions protruding from the same surface, e.g. the first surface may be spaced from another by at least one protrusion protruding from the opposite surface, e.g. the second surface. This spacing may provide advantages if the heating element is to be wound up, for example to a spiral shape, as neighboring protrusions protruding from one side may otherwise collide if the heating element is bent to a sufficiently small radius.

Heat transfer between the gas flow and the heating element may be enhanced to a significant degree if it is provided that the resistance element comprises multiple protrusions arranged along the longitudinal direction forming a first row of protrusions, wherein a first spacing in the longitudinal direction is provided between neighboring protrusions of the first row. The first spacing may be defined as a distance between centers of neighboring protrusions. In particular, it may be defined as a distance between longitudinal centers of the protrusions, i.e. between central points of the protrusion width of the protrusions.

Preferably, the first spacing may at least be equal to one protrusion width, more preferably to at least 1.25 protrusion widths of a protrusion, such that protrusions do not overlap and/or a sufficiently large passage is provided for the gas flow to pass around the protrusions. In particular, the first spacing and the dimensions of the protrusions may be such that a distance of at least two times the material thickness of the base body remains between outermost points of the protrusions in the longitudinal direction. Depending on the desired increase in surface area and/or a desired maximum pressure drop, the number of protrusions, the dimensions of the protrusions and the first spacing may be designed accordingly.

Easy manufacture of the protrusions may be achieved if the first spacing is constant along the longitudinal direction.

However, it may be provided that the first spacing varies along the longitudinal direction continuously or non-continuously. This may be advantageous if the heating element is to be wound up, for example to a spiral shape. In particular, the first spacing may decrease or increase continuously or non-continuously from the end regions toward a region between the end regions, preferably towards a region centered between the end regions.

For further enhancement of the heat transfer characteristics of the heating element, it may be provided that that the resistance element further comprises multiple protrusions arranged along the longitudinal direction forming a second row of protrusions. Consequently, a larger number of protrusions may be provided in a given longitudinal extension of the resistance element.

The protrusions of the second row may be spaced from the protrusions of the first row by a second spacing in the transverse direction. The second spacing may be defined as a distance between centers of protrusions. In particular, it may be defined as a distance between transverse centers of the protrusions, i.e. between central points of the protrusion lengths of the protrusions.

Preferably, the second spacing may at least be equal to one protrusion length, more preferably to at least 1.25 protrusion lengths of a protrusion, such that protrusions do not overlap and/or a sufficiently large passage is provided for the gas flow to pass around the protrusions.

Similarly, a first spacing in the longitudinal direction may also be provided between neighboring protrusions of the second row, wherein the first spacing may be constant along the longitudinal direction. Alternatively, the first spacing may vary along the longitudinal direction continuously or non-continuously, in particular may decrease or increase continuously or non-continuously from the end regions toward a region between the end regions, preferably towards a region centered between the end regions.

According to a preferred embodiment of the invention it is proposed that an offset in the longitudinal direction is provided between protrusions of the first row and corresponding neighboring protrusions of the second row, which offset is constant along the longitudinal direction, or which offset varies along the longitudinal direction continuously or non-continuously.

It may be provided that the heating element comprises protrusions with different shapes and/or dimensions. In particular, protrusions of different shapes and/or dimensions may be provided within the first and/or the second row. Further, shapes and/or dimensions of protrusions may differ between the first and the second row.

An increased area available for heat transfer may be achieved in that the heating element comprises more than one resistance element, and in that the resistance elements are arranged following one another in a direction perpendicular to the transverse direction and the longitudinal direction. Mechanical stability of the heating element may be enhanced if the resistance elements are connected to one another in at least one contact area. Preferably, the connection is heat- and/or electrically conducting. Preferably, the connection between the resistance elements may be formed by a material bond, in particular may be a welded, and/or soldered connection. If the resistance element is produced by a molding process, or by an additive manufacturing process, a material bond at the contact area may also be achieved by this manufacturing process.

Alternatively or additionally, it may be provided that the connection is formed by a mechanical connection, in particular by a positive and/or friction locking connection. For instance, the connection may be designed as a snap fastener, where a rivet is provided on one of the connected partners, and a socket is provided on the other one.

A particularly efficient approach to connecting the resistance elements to one another may be characterized in that the contact area is formed between a wall section, in particular a top wall section, of a protrusion of a resistance element and a wall section, in particular a top wall section, of a protrusion of a neighboring resistance element, and/or a wall section, in particular a top wall section, of a protrusion of a resistance element and a first surface or a second surface of a base body of a neighboring resistance element. In this way, a protrusion height, for instance a height of the protrusion in direction of protrusion, may be used for spacing the resistance elements to one another.

According to another embodiment of the invention it is proposed that the heating element comprises at least one further resistance element which does not comprise protrusions. Thus, a base body of the further resistance element may be flat. However, the base body of the further resistance element may alternatively be corrugated and exhibit valley sections and elevation sections alternating preferably in the longitudinal direction. The elevation sections may be spaced from the valley sections in a direction perpendicular to the longitudinal direction and the transverse direction of the base body. The elevation sections and the valley sections may be parallel to one another. They may be connected to one another by angled sections, that may be at an angle to the surfaces of the valley sections and/or elevation sections.

The resistance element and the further resistance element may be arranged following one another in a direction perpendicular to the transverse direction and the longitudinal direction. The resistance element may be connected to the further resistance element in at least one contact area in a heat- and/or electrically conducting manner. The connection between the resistance element and the further resistance element may preferably be formed by a material bond, in particular be a welded, and/or soldered connection. If the base body of the further resistance element is corrugated, the peak and/or the valley sections may lend themselves to provide for the contact area.

A compact and robust heating device that may be easily installed to be introduced into a gas flow may be provided if a housing is provided, if the housing comprises a perimetral wall partially enclosing a receiving space, in which receiving space the heating element can be received, and if the receiving space is at least partially open in and against the transverse direction of the heating element receivable therein, such that a passage for the gas flow is formed. The gas can thus flow through the passage and hereby pass the heating element such that heat transfer can take place.

The heating element may be securely held in the receiving space if a support structure is provided to support the heating element therein. The support structure may be connected to the perimetral wall directly or indirectly and may extend at least partially across the passage. In this way, the heating element may be supported at least partially across the passage, e.g., against forces acting on it from the gas flow.

It may be provided that the support structure is in the form of a cage in which the heating element may be held. In particular, the support structure, in which the heating element is held, may be insertable into the receiving space. This way, the support structure and the heating element may be connected to the housing as a preassembled unit.

Preferably, connectors may be provided, which connectors may comprise connecting sections that extend to the outside of the receiving space and are connectable to the source of electrical power, which connectors may further comprise first connecting sections extending into to the receiving space, to which the connection areas of the heating element can be connected.

The invention will be further described by way of example with reference to the drawings, in which:
- Fig. 1: is a schematic perspective view of a heating device and an exhaust gas treatment device,
- Fig. 2: is a schematic perspective exploded view of a heating device,
- Fig. 3: is a schematic perspective view of a section of a base body of a resistance element,
- Fig. 4: is a schematic perspective view of a section of a resistance element,
- Fig. 5: is a further schematic perspective view of a section of a resistance element,
- Fig. 6: is a further schematic perspective view of a section of a resistance element,
- Fig. 7: is a further schematic perspective view of a section of a resistance element,
- Fig. 8: is a schematic perspective view of a section of a resistance element with two rows of protrusions,
- Fig. 9: is a schematic perspective view of a section of a heating element comprising a resistance element and a further resistance element without protrusions,
- Fig. 10: is a schematic perspective view of a section of a heating element comprising two resistance elements and a further resistance element,
- Fig. 11: is a schematic perspective view of a section of a heating element comprising two resistance elements,
- Fig. 12: is a further schematic perspective view of a section of a heating element comprising two resistance elements,
- Fig. 13: is a schematic perspective view of a section of a heating element comprising a resistance element and a further resistance element with a corrugated base body,
- Fig. 14: is a schematic perspective view of a section of a heating element comprising two resistance elements with alternating directions of protrusion,
- Fig. 15: is a schematic perspective view of a section of a heating element comprising four resistance elements with alternating directions of protrusion, and
- Fig. 16: is a further schematic perspective view of a section of a heating element comprising two resistance elements.

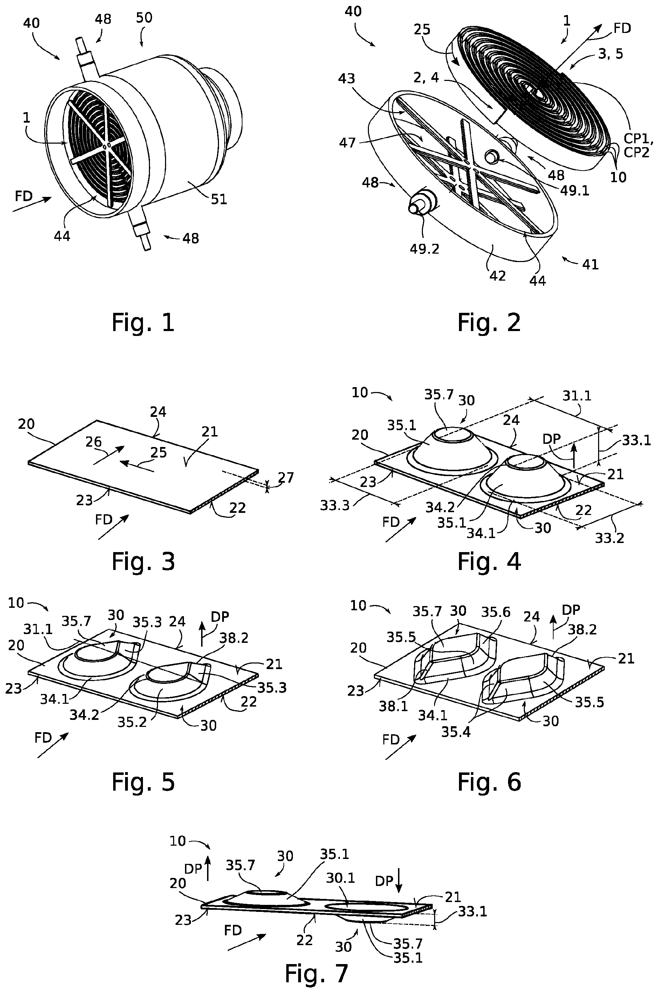

Figure 1 shows a perspective view of a heating device 40 and an exhaust gas treatment device 50. The exhaust gas treatment device 50 may be a catalytic converter. The exhaust gas treatment device 50 may comprise a housing 51 in which a catalyst may be held. The housing 51 may comprise an upstream opening facing against a main flow direction FD of the gas flow through which the gas flow can enter the housing 51 and a downstream opening facing in the main flow direction FD through which the gas flow can exit the housing 51. The main flow direction FD may be a bulk flow direction of the gas flow.

Figure 1 further shows that the heating device 40 may be arranged upstream of the exhaust gas treatment device 50. In particular, it may be arranged in close vicinity of the upstream opening of the housing 51 of the exhaust gas treatment device 50, such that heat losses of the gas heated by the heating device 40 on the way to the catalyst can be minimized.

In Figure 2, an exploded view of the heating device 40 is shown. From this drawing it is evident that the heating device 40 may comprise a housing 41 in which a heating element 1 may be received. More particularly, the housing 41 may comprise a receiving space 47 in which the heating element 1 may be received. The housing 41 may comprise a perimetral wall 42 that partially encloses the receiving space 47. The wall 42 may only partially enclose the receiving space 47 such that a passage 44 remains open for the gas flow to pass through. As in the embodiment shown, the passage 44 may be a circular passage 44 and the wall 42 may be a circumferential wall. Advantageously, the receiving space 47 for the heating element 1 may be provided within the passage 44 so that the gas passing the passage 44 is guided over the heating element 1.

The housing 41 may further comprise at least one support structure 43 to support the heating element 1 when it is received in the receiving space 47. The support structure 43 may be connected to the perimetral wall 42 and may extend at least partially across the passage 44 and the receiving space 47. As in the embodiment shown, the support structure 43 may comprise radial and/or diametral bars extending from the wall 42. Preferably, and as shown, the housing 41 may comprise two support structures 43 arranged both up- and downstream of the receiving space 47. One support structure 43 or both support structures 43, as best visible in Figure 2, may be described as forming a cage, in which the heating element may be held. It is also conceivable that the housing 41 may comprise more than two support structures 43.

Electrical connectors 48 for establishing an electrical connection between the heating element 1 and an electrical power source may preferably also be provided on the housing 41. As visible in Figure 2, two connectors 48 may be provided which may comprise first connecting sections 49.1 extending radially into to the receiving space 47. These first connecting sections 49.1 may be connectable to connection areas 2, 3 of the heating element 1. The connectors 48 may further comprise second connecting sections 49.2 that may extend radially to the outside of the receiving space 47 and/or the outside of the housing 41 and that are connectable to the source of electrical power.

The heating element 1 may comprise one or more resistance elements 10. In the embodiment shown in Figure 2, the heating element 1 comprises three resistance elements 10 that are arranged in parallel to one another. Note that at least one resistance element 10 comprises at least one protrusion 30, which protrusion 30 is not visible in Figures 1 and 2. The protrusion 30 will be subject of discussion further below.

The resistance elements 10 comprise a plate shaped, preferably, as shown, a strip shaped base body 20. The base body is preferable made of sheet metal. A section of a base body 20 is shown in a perspective view in Figure 3. The section shown in Figure 3 does not comprise any protrusions 30.

The base body 20 comprises opposite first and second surfaces 21, 22, each extending in both a longitudinal and transverse direction 25, 26 of the base body 20. In Figure 3, the first surface 21 is an upper surface and the second surface 22 is a bottom surface. The longitudinal direction 25 may, in a strip-shaped base body 20, generally be the direction of a longer extension than an extension in the transverse direction 26. The first and second surfaces 21, 22 are connected by opposite third and fourth surfaces 23, 24 that may form the smaller surfaces of the strip shaped base body 20.

As can be further gathered from Figure 3, the base body 20 is preferably arranged such that the main flow direction FD is parallel to the transverse direction 26 and incident on one of the third or fourth surface 23, 24, presently incident on the third surface 23. The third surface 23 may thus be referred to as an upstream surface and the fourth surface 24 may be referred to as a downstream surface. The base body 20 may have a material thickness 27 measured between the first and second surfaces 21, 22 that may be significantly smaller than an extension of the base body 20 in the transverse direction 26 and the longitudinal direction 25.

Returning to Figure 2, it is evident that the heating element 1 may be wound up in a spiral shape. In particular, the heating element 1 may be wound up in a double spiral. Starting from a first longitudinal end region 5 toward a longitudinal central region of the heating element 1, the heating element 1 may revolve around a first center point CP1 with decreasing distance (radius) from the first center point CP1 in a first spiral. The first center point CP1 may be the center point of the first spiral. Starting from the central region toward a second longitudinal end region 4 of the heating element 1, the heating element 1 may revolve around a second center point CP2 of a second spiral with increasing distance (radius) from the second center point CP2. As is shown in the drawings, the first and second spirals may have opposite directions of rotation. The first center point and/or the center point may be in the longitudinal central region of the heating element 1. In particular, the first and second center points may coincide.

The connection areas 2, 3 of the heating element 1 may be preferably arranged in the longitudinal end regions 4, 5 of the heating element 1 such that a current may flow through a sufficiently large length of the heating element 1. If more than one resistance element 10 is provided, each of the resistance elements 10 may comprise connection areas 2, 3 or the resistance elements 10 may be joined in their end regions 4, 5 to comprise common connection areas 2, 3.

While the heating element 1 may be wound up, references to directions such as the longitudinal direction 25, the transverse direction 26, to surfaces such as the first surface 21 and the second surface 22, will generally refer to the heating element 1 and/or the resistance element 10 in the unwound, straight state, unless otherwise stated or evident from the context. In other words, a straight longitudinal direction 25 of the base body 20 as shown in Figure 3 may be bent according to the shape of the wound-up heating element 1 as shown in Figure 2. However, for ease of discussion, it will be assumed straight. It should further be noted that sections of heating elements 1, resistance elements 10 and/or base bodies 20 shown in Figures 3 to 15 are shown in an unwound state. This may correspond to a state before the heating element 1 is wound up.

Referring now to Figures 4 to 7, the resistance element 10 comprises at least one protrusion 30. As can be understood from these Figures, preferably more than one protrusion 30 may be provided on the resistance element 10, which protrusions 30 may be arranged along the longitudinal direction 25 and which protrusions 30 may be spaced from one another by a first spacing 31.1.

Figure 4 shows a first example of protrusions 30. The protrusions 30 according to this example protrude from the first surface 21 in a direction of protrusion DP which is transverse to the first surface 21, in particular may be normal thereto. A protrusion height 33.1 may be measured between the surface the protrusion 30 is protruding from, i.e. the first surface 21 in the present example, and an outermost point of the protrusion 30 in the direction of protrusion DP.

The protrusion 30 may have a protrusion height 33.1 that may be significantly larger than the material thickness 27 of the base body 20. Further, the protrusion 30 may have a protrusion length 33.2 in the transverse direction 26 that may be significantly larger than the material thickness 27 of the base body 20. Further, the protrusion 30 may have a protrusion width 33.3 in the longitudinal direction 25 that may be significantly larger than the material thickness 27 of the base body 20. For example, the protrusion width 33.3 may be similar to the protrusion length 33.2, as shown in Figure 4.

In principle, the above discussion about protrusion heights 33.1, protrusion lengths 33.2 and protrusion widths 33.3 may hold for all examples shown of protrusions 30, i.e. for protrusions 30 shown in Figures 4 through 15. It will be obvious, however, that protrusion widths 33.3 and protrusion lengths 33.2 need not be identical. For example, the protrusions 30 shown in Figures 5 and 6 may comprise a protrusion width 33.3 that is smaller than their protrusion length 33.2.

In general, larger dimensions such as protrusion heights 33.1, protrusion lengths 33.2 and protrusion widths 33.3 provide for a larger area that is available for heat transfer between the heating element 1 and the gas flow. If the ratio of the respective dimension of the protrusion 30 to the material thickness 27 of the base body 20 is large, a large increase in area is achieved while keeping the overall material mass of the heating element 1 low.

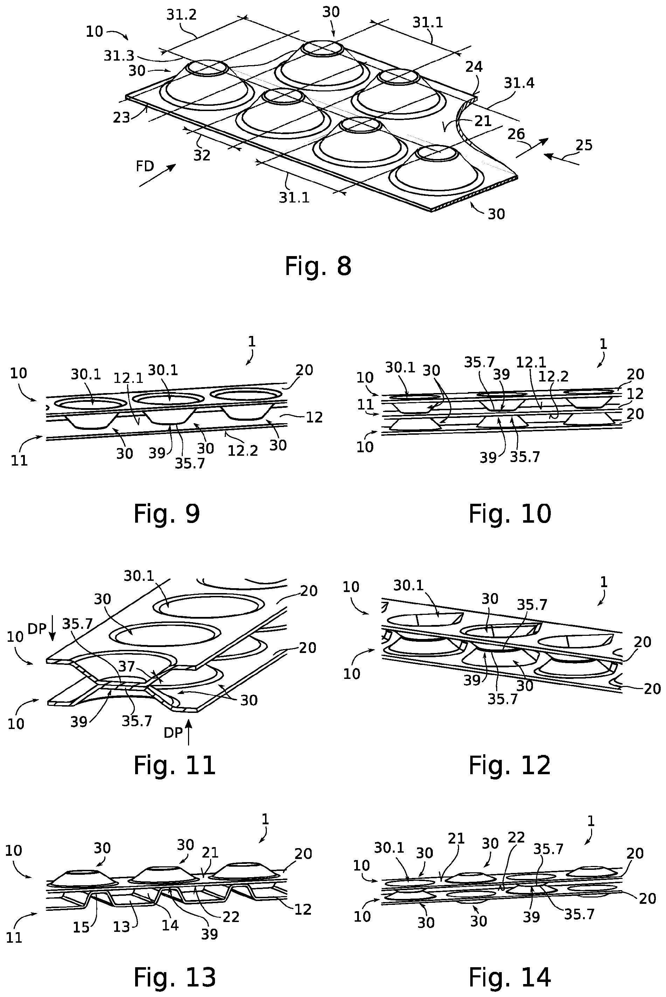

A material thickness 37 in a region of a protrusion 30 (cf. Fig. 11) may be smaller than a material thickness 27 of the base body 20 in a region without protrusion.

Returning now to Figure 4, the protrusion 30 may comprise a side wall section 35.1 that may rise from the first surface 21 in a direction at least partially aligned with the direction of protrusion DP. The side wall section 35.1 may form a perimetral wall of the protrusion 30 enclosing the protrusion 30 in all directions parallel to the first surface 21, that is, in a direction facing against the main flow direction FD (being aligned with the longitudinal direction 25), the side wall section 35.1 thus forming an upstream wall, in a direction facing in the main flow direction FD, the side wall section 35.1 thus forming a downstream wall, and in lateral directions facing in and against the longitudinal direction 25, the side wall section 35.1 thus forming lateral walls.

The protrusion 30 may further comprise a top wall section 35.7 that closes off the protrusion 30 in the direction of protrusion DP. The top wall section 35.7 may thus be connected to the side wall section 35.1 in an area facing away from the surface the protrusion 30 is protruding from, in the case of Figure 4 from the first surface 21.

Smooth transitions between the first surface 21 and the side wall section 35.1 and/or between the side wall section 35.1 and the top wall section 35.7 may be provided by transitional sections 34.1, 34.2, respectively, which may be designed as radii and/or as chamfers.

It is also conceivable, however, that the side wall section 35.1 does not form a fully perimetral wall but only a partially perimetral wall. For instance, the side wall section 35.1 may form a wall only in one or some of the above-mentioned directions. In other directions, the protrusion 30 may then be open. In the case the wall is only partially perimetral, there may result a perforation in the base body 20 in directions that are not covered by an only partially perimetral wall.

The side wall section 35.1 may also be described as following the form of a truncated cone. A cross-sectional area of the truncated cone may decrease in the direction of protrusion DP as can be clearly seen in Figure 4. In this context, it is worth mentioning that a cone may have, but not necessarily needs to have a circular basis. For example, a side wall section 35.2 as shown in Figure 5 may also be understood as following the shape of a truncated cone, where the basis may be an ellipse. From the side wall section 35.2 of Figure 5 it is also clear that following the form of a truncated cone does not necessarily need to mean providing a closed cone, i.e. walls rising up fully perimetral around the basis.

Further, a cone may have a polygon-shaped basis, for instance a triangular basis. In this context, the two converging side wall sections 35.3 shown in Figure 5 may be considered to follow the form of a truncated cone with a triangular basis. In an even wider sense, any shape, in particular a combined shape, may be the basis for a cone. In this sense, the side wall section 35.2 and the converging side wall sections 35.3 of Figure 5 may be considered following the form of a truncated cone with a basis that is combined from an ellipse and a triangle. In a similar way, the side wall sections 35.4, 35.5, and 35.6 shown in Figure 6 may also be considered to follow the form of a truncated cone with a basis combined from elliptical section (side wall sections 35.5) arranged between two triangles (side wall sections 35.4).

Referring now to the example shown in Figure 5, the protrusion 30 may have a side wall section 35.2 forming an upstream wall facing against the main flow direction FD, and providing parts of lateral walls facing in and against the longitudinal direction 25. A base shape of the truncated cone formed by the side wall section 35.2 may be a an ellipse, in particular a circle. Following the transverse direction 26 along the protrusion length 33.2 of the protrusion 30, the side wall section 35.2 may transition into two opposite and converging side wall sections 35.3. The converging side wall sections 35.3 may form part of the lateral walls of the protrusion 30 in and against the longitudinal direction 25. At their junction, the side wall sections 35.3 may form a trailing edge 38.2 of the protrusion 30. The protrusion 30 may be closed off in the direction of protrusion DP by a top wall section 35.7.

The protrusion 30 of Figure 5 may be described as droplet-shaped and may provide a particularly streamlined design. Consequently, a particularly low pressure drop may be achieved and disturbances of the gas flow may be minimized.

In Figure 6, another example of a protrusion 30 is shown. Similar to the protrusion 30 of Figure 5, the protrusion 30 may comprise two converging side wall sections 35.6 that may form, in the area of their junction, a trailing edge 38.2 of the protrusion 30. In contrast to the example of Figure 5, the protrusion 30 may also feature two converging side wall sections 35.4 that may, in the area of their junction, form a leading edge 38.1. Converging side wall sections 35.4 forming the leading edge 38.1 and converging side wall sections 35.6 forming the trailing edge 38.2 may be transitioned into one another by side wall sections 35.5 located in a central region of the protrusion 30 with respect to its protrusion length 33.2. The side wall sections 35.5 may together follow the form of a truncated cone with an elliptic base, as shown in Figure 6. The protrusion 30 may be closed off in the direction of protrusion DP by a top wall section 35.7.

Figure 7 provides an example of a resistance element 10 that is provided with protrusions 30 protruding from the first surface 21 as well as from the second surface 22. Consequently, directions of protrusion DP of protrusions 30 according to this arrangement may be opposite to one another. The protrusions 30 of Figure 7 resemble those shown in Figure 4, albeit comprising a smaller protrusion height 33.1 and less steeply rising walls. Obviously, the arrangement of protrusions 30 protruding from the first surface 21 and the second surface 22, preferably alternatingly, is not restricted to the shape of protrusions 30 shown in Figure 7, but may be applied to all shapes of protrusions 30, for example shapes as shown in Figures 4 to 5.

Further, as visible from the protrusion 30 in the right of Figure 7, the protrusion 30 may form a depression 30.1 which is set back from the first surface 21, i.e., the surface opposite the second surface 22 from which the protrusion 30 protrudes. Obviously, all other examples of protrusions 30 shown may comprise such a depression 30.1.

Figures 4 to 7 have shown sections of resistance elements 10, which resistance elements 10 comprise multiple protrusions 30 arranged along the longitudinal direction 25 forming a first row 31.3 (cf. Fig. 5) of protrusions 30. Within the first row 31.3 of protrusions 30, the protrusions 30 may be spaced by a first spacing 31.1 (cf. Fig. 4) in the longitudinal direction 25. The first spacing 31.1may be defined as a distance between centers of neighboring protrusions 30. In particular, it may be defined as a distance between centers of the 30 with respect to the longitudinal direction 25, i.e. between central points of the protrusion width 33.3 of the protrusions.

Turning now to Figure 8, there is shown an example of a resistance element 10 further comprising multiple protrusions 30 arranged along the longitudinal direction 25 forming a second row 31.4 of protrusions 30. The second row 31.4 may be spaced from the first row 31.3 by a second spacing 31.2 in the transverse direction 26. In this way, the second row 31.4 may provide additional protrusions 30 that are located further downstream than the protrusions 30 of the first row 31.3. Consequently, additional area for heat transfer is provided. The second spacing 31.2 may be measured between central points of protrusion lengths 33.2 of the protrusions 30.

As shown in Figure 8, similar to the protrusions 30 of the first row 31.3, the protrusions 30 of the second row 31.4 may be spaced from one another by a first spacing 31.1.

The protrusions 30 of the second row 31.4 may be offset from the protrusions 30 of the first row 31.3 in the longitudinal direction 25 by an offset 32. Preferably, as shown in the drawing, the offset 32 may be half of the first spacing 31.1 of the protrusions 30 of the first row 31.3 and/or the second row 31.4. Consequently, the protrusions 30 of the second row 31.4 may be arranged in between the protrusions 30 of the first row 31.3 with respect to the longitudinal direction 25. In this way, the gas flow may be deflected by the protrusions 30 of the first row 31.3 such that it is guided toward the protrusions 30 of the second row 31.4.

Obviously, an arrangement of protrusions 30 in more than one row is not restricted to the shapes of protrusions 30 shown in Figure 8. It is rather conceivable that any other shape of protrusion 30 be provided. It is conceivable that the shape and/or dimensions of the protrusions 30 of the second row 31.4 may differ from that of the protrusions 30 of the first row 31.3.

Figures 9 to 15 show sections of heating elements 1 comprising more than one resistance element 10 and/or comprising at least one resistance element 10 and a further resistance element 11, which further resistance element 11 does not comprise protrusions 30. From these Figures, it is evident that the resistance elements 10 and/or further resistance elements 11 may be arranged following one another in a direction perpendicular to the transverse direction 26 and the longitudinal direction 25. In other words, the resistance elements 10 and/or further resistance elements 11 may be stacked in a direction perpendicular to the main flow direction FD, as shown in Figure 2 and already discussed in the context thereof.

The stacked resistance elements 10 and/or further resistance elements 11 may be connected to one another in at least one contact area 39. Preferably the connection is heat and/or electrically conducting, such that the heating element 1 may be heated up evenly and an even distribution of the current flowing through the heating element 1 may be achieved. In particular, the connection between the resistance elements 10 and/or further resistance elements 11 may be formed by a material bond, preferably may be a welded and/or soldered connection.

Referring first to Figure 9, there is shown a section of a heating element 1 comprising a resistance element 10 and a further resistance element 11. Similar to the resistance element 10, the further resistance element 11 may comprise a plate-, in particular stripe-shaped base body 12 with opposite first and second surfaces 12.1, 12.2. As in the case shown in Figure 9, the first and second surfaces 12.1, 12.2 may be flat (in the unwound state of the heating element 1).

As further visible in Figure 9, the further resistance element 11 does not comprise protrusions 30. In contrast, the resistance element 10 of Figure 9 comprises multiple protrusions 30 of a type as shown and discussed based on Figure 4. The arrangement of the resistance element 10 and the further resistance element 11 may be such that the protrusions 30 are oriented with their direction of protrusion DP towards the further resistance element 11. In this way, the contact area 39 may be provided on the top wall section 35.7 of the protrusion 30 and the first surface 12.1 of the base body 12 of the further resistance element 11.

Figure 10 shows an arrangement that is similar to that of Figure 9, while an additional resistance element 10 is provided, the protrusions 30 of which protrude toward the second surface 12.2 of the further resistance element 11 and may provide the contact area 39 to the second surface 12.2 in the area of their top wall section 35.7.

In Figure 11, an arrangement of two resistance elements 10 is shown that are stacked in a way that their protrusions 30 are oriented with their respective direction of protrusion DP facing one another. This way, the protrusions 30 may be connected with another in contact areas 39 provided in the area of their respective top wall sections 35.7.

Figure 12 provides an example for an arrangement similar to the arrangement of Figure 11, wherein the protrusions 30 comprise a droplet shape as shown in and discussed based on Figure 5.

Figure 13 shows an example of a heating element 1 comprising a resistance element 10 and a further resistance element 11. Similar to further resistance element 11 of Figures 9 and 10, the further resistance element 11 may comprise a plate-, in particular stripe-shaped base body 12. However, the further resistance element 11 shown in Figure 13 is not flat but is corrugated and exhibits valley sections 13 and elevation sections 15 alternating in the longitudinal direction 25. The valley sections 13 and the elevation sections 15 may be connected by angled sections 14. As shown in the drawing, the contact area 39 may be provided in the area of an elevation section 15 and the second surface 22 of the resistance element 10. The protrusions 30 of the resistance element 10 protrude from the first surface 21 and thus may face away from the further resistance element 11 with their direction of protrusion DP.

However, it is also conceivable that, for instance, the contact areas 39 may be provided between a top wall section 35.7 of a protrusion 30 and an elevation section 15 of the further resistance element 11.

Figure 14 provides another example of resistance elements 10 connected to one another at contact areas 39. The resistance elements 10 of Figure 14 may correspond to the resistance element 10 shown in and discussed based on Figure 7. Both resistance elements 10 may comprise protrusions 30 that alternatingly protrude from the first surfaces 21 and the second surfaces 22 of the respective base bodies 20. The arrangement may be such that contact areas 39 are formed between protrusions 30 of the resistance elements 10 that face one another, i.e. protrude in directions of protrusion DP opposite to one another. The protrusions 30 facing one another may be connected in a contact area 39 in the area of their respective top wall sections 35.7.

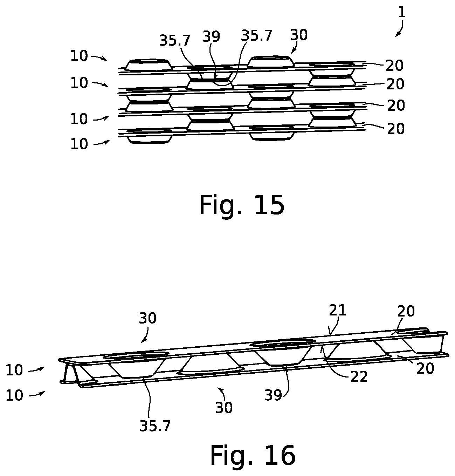

Figure 16 shows an example of resistance elements 10, wherein, as in the arrangement of Figure 11, the directions of protrusion DP of the protrusions 30 of the respective resistance elements 10 are facing one another. However, in this example, the protrusions 30 of one resistance element 10 are positioned in between protrusions of the other resistance element 10. The contact area may then be provided between a top wall sections 35.7 of a protrusion 30 of one respective resistance element 10 and one of the surfaces 22, 21 of the other respective resistance element 10.

The arrangement shown in Figure 15 is similar to that of Figure 14, except that two additional resistance elements 10 are shown that are connected to an arrangement corresponding to Figure 14 in the same way the two resistance elements 10 of Figure 14 are connected to one another.

The possibilities of arranging resistance elements 10 following one another in a direction perpendicular to the longitudinal direction 25 and the transverse direction 26 are not limited to the examples shown in Figures 9 to 15. Rather, any number of resistance elements 10 with any size or shape of protrusions 30 may be combined and connected to one another to form a heating element 1.

## Claims

1. Heating device (40) for heating a gas flow, in particular an exhaust gas flow,
comprising a heating element (1) adapted to enable heat exchange to the gas flow, wherein the heating element (1) comprises at least one resistance element (10),
wherein the resistance element (10) comprises a plate-shaped, in particular strip-shaped base body (20),
wherein the base body (20) comprises opposite first and second surfaces (21, 22), each extending in both a longitudinal and transverse direction (25, 26) of the base body (20), and opposite third and fourth surfaces (23, 24) connecting the first and second surfaces (21, 22) and each having a smaller surface area than each of the first and second surfaces (21, 22),
wherein the heating element (1) comprises connection areas (2, 3) that are connectable to a source of electrical power, such that the heating element (1) can be heated up through resistive heating,
**characterized**
**in that** the resistance element (10) comprises at least one protrusion (30) protruding from the first and/or the second surface (21, 22) of the base body (20) in a direction of protrusion (DP),
**in that** the protrusion (30) is integrally formed from the base body (20),
and **in that** the protrusion (30) forms a depression (30.1) which is set back from the surface (21, 22) opposite the surface (21, 22) from which the protrusion (30) protrudes.

2. Heating device (40) according to claim 1,
**characterized**
**in that** the protrusion (30) is formed from the base body (20) by a forming process, in particular a sheet metal forming process, preferably by embossing, more preferably by drawing or deep drawing, and/or
**in that** a material thickness (37) of the resistance element (10) in the region of a protrusion (30) is, at least in parts, smaller than or equal to a material thickness (27) of the base body (20).

3. Heating device (40) according claim 1 or 2,
**characterized**
**in that** the protrusion (30) comprises one or more wall sections (35.1-35.7) projecting from the surface (21, 22) from which the protrusion (30) protrudes,
and **in that** the one or more wall sections (35.1-35.7) form an at least partially perimetral wall of the protrusion (30) at least
on a side of the protrusion (30) facing in the transverse direction (26) and/or
on a side of the protrusion (30) facing against the transverse direction (26) and/or
on a side of the protrusion (30) facing in the longitudinal direction (25) and/or
on a side of the protrusion (30) facing against the longitudinal direction (25).

4. Heating device (40) according to claim 3,
**characterized**
**in that** the at least partially perimetral wall of the protrusion (30) comprises a side wall section (35.1-35.6) which follows the form of a truncated cone,
wherein a cross-sectional area of the truncated cone decreases in the direction of protrusion (DP),
and/or that the at least partially perimetral wall of the protrusion (30) comprises a side wall section (35.1-35.6) which at least partially follows the form of a spherical dome, an ellipsoid dome and/or a polygon, in particular a tetrahedron or a hexahedron, preferably a cuboid, more preferably a cube.

5. Heating device (40) according to claim 3 or 4,
**characterized**
**in that** the at least partially perimetral wall of the protrusion (30) comprises at least two side wall sections (35.3) which converge to one another in the transverse direction (26) to form an edge, which edge forms a trailing edge (38.2) terminating the protrusion (30) in the transverse direction (26), and/or
**in that** the at least partially perimetral wall of the protrusion (30) comprises at least two side wall sections (35.4) which converge to one another against the transverse direction (26) to form an edge, which edge forms a leading edge (38.1) terminating the protrusion (30) against the transverse direction (26).

6. Heating device (40) according to any of claims 3 to 5,
**characterized**
**in that** the one or more wall sections (35.1-35.7) comprise a top wall section (35.7) connected to the at least partially perimetral wall of the protrusion (30),
which top wall section (35.7) terminates the protrusion (30) in the direction of protrusion (DP).

7. Heating device (40) according to any of claims 1 to 6,
**characterized**
**in that** the resistance element (10) comprises at least one protrusion (30) protruding from the first surface (21) and at least one protrusion (30) protruding from the second surface (22),
wherein preferably the resistance element (10) comprises multiple protrusions (30) which, in the longitudinal direction (25), alternatingly protrude from the first and second surfaces (21, 22).

8. Heating device (40) according to any of claims 1 to 7,
**characterized**
**in that** the resistance element (10) comprises multiple protrusions (30) arranged along the longitudinal direction (25) forming a first row (31.3) of protrusions (30),
wherein a first spacing (31.1) in the longitudinal direction (25) is provided between neighboring protrusions (30) of the first row (31.3),
wherein the first spacing (31.1) is constant along the longitudinal direction (25),
or wherein the first spacing (31.1) varies along the longitudinal direction (25) continuously or non-continuously,
in particular wherein the first spacing (31.1) decreases or increases continuously or non-continuously from the end regions (4, 5) toward a region between the end regions (4, 5), preferably towards a region centered between the end regions (4, 5).

9. Heating device (40) according to claim 8,
**characterized**
**in that** the resistance element (10) further comprises multiple protrusions (30) arranged along the longitudinal direction (25) forming a second row (31.4) of protrusions (30),
wherein the protrusions (30) of the second row (31.4) are spaced from the protrusions (30) of the first row (31.3) by a second spacing (31.2) in the transverse direction (26),
wherein a first spacing (31.1) in the longitudinal direction (25) is provided between neighboring protrusions (30) of the second row (31.4),
wherein the first spacing (31.1) is constant along the longitudinal direction (25),
or wherein the first spacing (31.1) varies along the longitudinal direction (25) continuously or non-continuously,
in particular wherein the first spacing (31.1) decreases or increases continuously or non-continuously from the end regions (4, 5) toward a region between the end regions (4, 5), preferably towards a region centered between the end regions (4, 5).

10. Heating device (40) according to claim 9,
**characterized**
**in that** an offset (32) in the longitudinal direction (25) is provided between protrusions (30) of the first row (31.3) and corresponding neighboring protrusions (30) of the second row (31.4),
which offset (32) is constant along the longitudinal direction (25),
or which offset (32) varies along the longitudinal direction (25) continuously or non-continuously.

11. Heating device (40) according to any of claims 1 to 10,
**characterized**
**in that** the heating element (1) comprises more than one resistance element (10),
**in that** the resistance elements (10) are arranged following one another in a direction perpendicular to the transverse direction (26) and the longitudinal direction (25),
and **in that** the resistance elements (10) are connected to one another in at least one contact area (39) in a heat- and/or electrically conducting manner,
wherein the connection between the resistance elements (10) is preferably formed by a material bond, in particular is a welded, and/or soldered connection,
and/or wherein the connection is formed by a mechanical connection, in particular by a positive and/or friction locking connection.

12. Heating device (40) according to claim 11,
**characterized**
**in that** the contact area (39) is formed between
a wall section (35.1-35.7), in particular a top wall section (35.7), of a protrusion (30) of a resistance element (10) and a wall section (35.1-35.7), in particular a top wall section (35.7), of a protrusion (30) of a neighboring resistance element (10), and/or
a wall section (35.1-35.7), in particular a top wall section (35.7), of a protrusion (30) of a resistance element (10) and a first surface (21) or a second surface (22) of a base body (20) of a neighboring resistance element (10).

13. Heating device (40) according to any of claims 1 to 12,
**characterized**
**in that** the heating element (1) comprises at least one further resistance element (11) which does not comprise protrusions (30),
wherein a base body (12) of the further resistance element (11) is flat,
or wherein the base body (12) of the further resistance element (11) is corrugated and exhibits valley sections (13) and elevation sections (15) alternating preferably in the longitudinal direction (25),
**in that** in that the resistance element (10) and the further resistance element (11) are arranged following one another in a direction perpendicular to the transverse direction (26) and the longitudinal direction (25),
and **in that** the resistance element (10) is connected to the further resistance element (11) in at least one contact area (39) in a heat- and/or electrically conducting manner,
wherein the connection between the resistance element (10) and the further resistance element (11) is preferably formed by a material bond, in particular is a welded, and/or soldered connection.

14. Heating device (40) according to any of claims 1 to 13,
**characterized**
**in that** a housing (41) is provided
**in that** the housing (41) comprises a perimetral wall (42) partially enclosing a receiving space (47),
in which receiving space (47) the heating element (1) can be received,
**in that** the receiving space (47) is at least partially open in and against the transverse direction (26) of the heating element (1) receivable therein, such that a passage (44) for the gas flow is formed,
wherein preferably a support structure (43) is provided to support the heating element (1) in the receiving space (47),
which support structure (43) is directly or indirectly connected to the perimetral wall (42) and extends at least partially across the passage (44),
and wherein preferably connectors (48) are provided,
which connectors (48) comprise connecting sections (49.2) that extend to the outside of the receiving space (47) and are connectable to the source of electrical power,
which connectors (48) further comprise first connecting sections (49.1) extending into to the receiving space (47), to which the connection areas (2, 3) of the heating element (1) can be connected.

## Patentansprüche

1. Heizvorrichtung (40) zur Erwärmung eines Gasstroms, insbesondere eines Abgasstroms,
mit einem Heizelement (1), das dazu ausgebildet ist, einen Wärmeaustausch mit dem Gasstrom zu ermöglichen, wobei das Heizelement (1) mindestens ein Widerstandselement (10) aufweist,
wobei das Widerstandselement (10) einen plattenförmigen, insbesondere streifenförmigen Grundkörper (20) aufweist,
wobei der Grundkörper (20) gegenüberliegende erste und zweite Oberflächen (21, 22) aufweist, die sich jeweils sowohl in einer Längs- als auch in einer Querrichtung (25, 26) des Grundkörpers (20) erstrecken, und gegenüberliegende dritte und vierte Oberflächen (23, 24), die die ersten und zweiten Oberflächen (21, 22) verbinden und jeweils eine kleineren Flächeninhalt als die ersten und zweiten Oberflächen (21, 22) aufweisen,
wobei das Heizelement (1) Anschlussbereiche (2, 3) aufweist, die mit einer elektrischen Stromquelle verbindbar sind, so dass das Heizelement (1) durch Widerstandserwärmung aufgeheizt werden kann,
**dadurch gekennzeichnet,**
**dass** das Widerstandselement (10) mindestens einen Vorsprung (30) aufweist, der von der ersten und/oder der zweiten Oberfläche (21, 22) des Grundkörpers (20) in einer Vorsprungsrichtung (DP) hervorsteht,
**dass** der Vorsprung (30) einstückig mit dem Grundkörper (20) ausgebildet ist,
und **dass** der Vorsprung (30) eine Vertiefung (30.1) bildet, die von der Oberfläche (21, 22) gegenüber der Oberfläche (21, 22), aus der der Vorsprung (30) hervorsteht, zurückversetzt ist.

2. Heizvorrichtung (40) nach Anspruch 1,
**dadurch gekennzeichnet,**
**dass** der Vorsprung (30) durch ein Umformverfahren, insbesondere ein Blechumformverfahren, vorzugsweise durch Prägen, besonders bevorzugt durch Ziehen oder Tiefziehen, aus dem Grundkörper (20) geformt ist, und/oder
**dass** eine Materialstärke (37) des Widerstandselements (10) im Bereich eines Vorsprungs (30) zumindest abschnittsweise kleiner oder gleich einer Materialstärke (27) des Grundkörpers (20) ist.

3. Heizvorrichtung (40) nach Anspruch 1 oder 2,
**dadurch gekennzeichnet,**
**dass** der Vorsprung (30) einen oder mehrere Wandabschnitte (35.1-35.7) umfasst, die von der Oberfläche (21, 22), von der der Vorsprung (30) hervorsteht, hervorstehen,
und **dass** der eine oder die mehreren Wandabschnitte (35.1-35.7) eine zumindest teilweise umlaufende Wand des Vorsprungs (30) bilden, zumindest
auf einer in Querrichtung (26) weisenden Seite des Vorsprungs (30) und/oder
auf einer Seite des Vorsprungs (30), die entgegen der Querrichtung (26) gerichtet ist, und/oder
auf einer in Längsrichtung (25) weisenden Seite des Vorsprungs (30) und/oder
auf einer Seite des Vorsprungs (30), die entgegen der Längsrichtung (25) gerichtet ist.

4. Heizvorrichtung (40) nach Anspruch 3,
**dadurch gekennzeichnet,**
**dass** die zumindest teilweise umlaufende Wand des Vorsprungs (30) einen seitlichen Wandabschnitt (35.1-35.6) aufweist, der die Form eines Kegelstumpfes aufweist,
wobei eine Querschnittsfläche des Kegelstumpfes in Vorsprungsrichtung (DP) abnimmt,
und/oder dass die zumindest teilweise umlaufende Wand des Vorsprungs (30) einen seitlichen Wandabschnitt (35.1-35.6) aufweist, der zumindest teilweise der Form einer sphärischen Kuppel, einer ellipsoiden Kuppel und/oder eines Polygons, insbesondere eines Tetraeders oder eines Hexaeders, vorzugsweise eines Quaders, besonders bevorzugt eines Würfels, folgt.

5. Heizvorrichtung (40) nach Anspruch 3 oder 4,
**dadurch gekennzeichnet,**
**dass** die zumindest teilweise umlaufende Wand des Vorsprungs (30) mindestens zwei seitliche Wandabschnitte (35.3) aufweist, die in Querrichtung (26) zu einer Kante zusammenlaufen, die eine den Vorsprung (30) in Querrichtung (26) abschließende Nachlaufkante (38.2) bildet, und/oder
**dass** die zumindest teilweise umlaufende Wand des Vorsprungs (30) mindestens zwei seitliche Wandabschnitte (35.4) aufweist, die entgegen der Querrichtung (26) zu einer Kante zusammenlaufen, die eine den Vorsprung (30) entgegen der Querrichtung (26) abschließende Stirnkante (38.1) bildet.

6. Heizvorrichtung (40) nach einem der Ansprüche 3 bis 5,
**dadurch gekennzeichnet,**
**dass** der eine oder die mehreren Wandabschnitte (35.1-35.7) einen oberen Wandabschnitt (35.7) umfassen, der mit der zumindest teilweise umlaufenden Wand des Vorsprungs (30) verbunden ist,
wobei der obere Wandabschnitt (35.7) den Vorsprung (30) in Vorsprungrichtung (DP) abschließt.

7. Heizvorrichtung (40) nach einem der Ansprüche 1 bis 6,
**dadurch gekennzeichnet,**
**dass** das Widerstandselement (10) mindestens einen Vorsprung (30), der von der ersten Oberfläche (21) hervorsteht, und mindestens einen Vorsprung (30), der von der zweiten Oberfläche (22) hervorsteht, aufweist,
wobei das Widerstandselement (10) vorzugsweise mehrere Vorsprünge (30) aufweist, die in Längsrichtung (25) abwechselnd von der ersten und zweiten Oberfläche (21, 22) hervorstehen.

8. Heizvorrichtung (40) nach einem der Ansprüche 1 bis 7,
**dadurch gekennzeichnet,**
**dass** das Widerstandselement (10) mehrere Vorsprünge (30) aufweist, die entlang der Längsrichtung (25) angeordnet sind und eine erste Reihe (31.3) von Vorsprüngen (30) bilden,
wobei ein erster Abstand (31.1) in Längsrichtung (25) zwischen benachbarten Vorsprüngen (30) der ersten Reihe (31.3) vorgesehen ist,
wobei der erste Abstand (31.1) entlang der Längsrichtung (25) konstant ist,
oder wobei der erste Abstand (31.1) entlang der Längsrichtung (25) kontinuierlich oder nicht-kontinuierlich variiert,
insbesondere wobei der erste Abstand (31.1) kontinuierlich oder nicht-kontinuierlich von den Endbereichen (4, 5) zu einem Bereich zwischen den Endbereichen (4, 5), vorzugsweise zu einem Bereich in der Mitte zwischen den Endbereichen (4, 5), abnimmt oder zunimmt.

9. Heizvorrichtung (40) nach Anspruch 8,
**dadurch gekennzeichnet,**
**dass** das Widerstandselement (10) ferner mehrere Vorsprünge (30) aufweist, die entlang der Längsrichtung (25) angeordnet sind und eine zweite Reihe (31.4) von Vorsprüngen (30) bilden,
wobei die Vorsprünge (30) der zweiten Reihe (31.4) von den Vorsprüngen (30) der ersten Reihe (31.3) um einen zweiten Abstand (31.2) in der Querrichtung (26) beabstandet sind,
wobei zwischen benachbarten Vorsprüngen (30) der zweiten Reihe (31.4) ein erster Abstand (31.1) in der Längsrichtung (25) vorgesehen ist,
wobei der erste Abstand (31.1) entlang der Längsrichtung (25) konstant ist,
oder wobei der erste Abstand (31.1) entlang der Längsrichtung (25) kontinuierlich oder nicht-kontinuierlich variiert,
insbesondere wobei der erste Abstand (31.1) kontinuierlich oder nicht-kontinuierlich von den Endbereichen (4, 5) zu einem Bereich zwischen den Endbereichen (4, 5), vorzugsweise zu einem Bereich in der Mitte zwischen den Endbereichen (4, 5), abnimmt oder zunimmt.

10. Heizvorrichtung (40) nach Anspruch 9,
**dadurch gekennzeichnet,**
**dass** zwischen Vorsprüngen (30) der ersten Reihe (31.3) und entsprechenden benachbarten Vorsprüngen (30) der zweiten Reihe (31.4) ein Versatz (32) in der Längsrichtung (25) vorgesehen ist,
wobei der Versatz (32) entlang der Längsrichtung (25) konstant ist,
oder wobei der Versatz (32) entlang der Längsrichtung (25) kontinuierlich oder nicht-kontinuierlich variiert.

11. Heizvorrichtung (40) nach einem der Ansprüche 1 bis 10,
**dadurch gekennzeichnet,**
**dass** das Heizelement (1) mehr als ein Widerstandselement (10) umfasst,
**dass** die Widerstandselemente (10) in einer Richtung senkrecht zur Querrichtung (26) und zur Längsrichtung (25) hintereinander angeordnet sind,
und **dass** die Widerstandselemente (10) in mindestens einem Kontaktbereich (39) wärmeleitend und/oder elektrisch leitend miteinander verbunden sind,
wobei die Verbindung zwischen den Widerstandselementen (10) vorzugsweise durch eine stoffschlüssige Verbindung gebildet ist, insbesondere eine Schweiß- und/oder Lötverbindung ist,
und/oder wobei die Verbindung durch eine mechanische Verbindung, insbesondere durch eine form- und/oder kraftschlüssige Verbindung, gebildet ist.

12. Heizvorrichtung (40) nach Anspruch 11,
**dadurch gekennzeichnet,**
**dass** der Kontaktbereich (39) gebildet ist zwischen
einem Wandabschnitt (35.1-35.7), insbesondere einem oberen Wandabschnitt (35.7), eines Vorsprungs (30) eines Widerstandselements (10) und einem Wandabschnitt (35.1-35.7), insbesondere einem oberen Wandabschnitt (35.7), eines Vorsprungs (30) eines benachbarten Widerstandselements (10), und/oder
einem Wandabschnitt (35.1-35.7), insbesondere einem oberen Wandabschnitt (35.7), eines Vorsprungs (30) eines Widerstandselements (10) und einer ersten Oberfläche (21) oder einer zweiten Oberfläche (22) eines Grundkörpers (20) eines benachbarten Widerstandselements (10).

13. Heizvorrichtung (40) nach einem der Ansprüche 1 bis 12,
**dadurch gekennzeichnet,**
**dass** das Heizelement (1) mindestens ein weiteres Widerstandselement (11) umfasst, das keine Vorsprünge (30) aufweist,
wobei ein Grundkörper (12) des weiteren Widerstandselements (11) flach ist,
oder wobei der Grundkörper (12) des weiteren Widerstandselements (11) gewellt ist und vorzugsweise in Längsrichtung (25) abwechselnd Talabschnitte (13) und Erhebungsabschnitte (15) aufweist,
**dass** das Widerstandselement (10) und das weitere Widerstandselement (11) in einer Richtung senkrecht zur Querrichtung (26) und zur Längsrichtung (25) hintereinander angeordnet sind,
und **dass** das Widerstandselement (10) mit dem weiteren Widerstandselement (11) in mindestens einem Kontaktbereich (39) wärme- und/oder elektrisch leitend verbunden ist,
wobei die Verbindung zwischen dem Widerstandselement (10) und dem weiteren Widerstandselement (11) vorzugsweise durch eine stoffschlüssige Verbindung gebildet ist, insbesondere eine Schweiß- und/oder Lötverbindung ist.

14. Heizvorrichtung (40) nach einem der Ansprüche 1 bis 13,
**dadurch gekennzeichnet,**
**dass** ein Gehäuse (41) vorgesehen ist,
**dass** das Gehäuse (41) eine umlaufende Wand (42) aufweist, die einen Aufnahmeraum (47) teilweise umschließt,
wobei in dem Aufnahmeraum (47) das Heizelement (1) aufnehmbar ist,
**dass** der Aufnahmeraum (47) in und entgegen der Querrichtung (26) des darin aufnehmbaren Heizelements (1) zumindest teilweise offen ist, so dass ein Durchlass (44) für den Gasstrom gebildet wird,
wobei vorzugsweise eine Stützstruktur (43) zur Abstützung des Heizelements (1) im Aufnahmeraum (47) vorgesehen ist,
wobei die Stützstruktur (43) direkt oder indirekt mit der umlaufenden Wand (42) verbunden ist und sich zumindest teilweise über den Durchgang (44) erstreckt,
und wobei vorzugsweise Verbindungsstücke (48) vorgesehen sind,
wobei die Verbindungsstücke (48) Verbindungsabschnitte (49.2) umfassen, die sich zur Außenseite des Aufnahmeraums (47) erstrecken und mit der elektrischen Energiequelle verbindbar sind,
wobei die Verbindungsstücke (48) ferner erste, in den Aufnahmeraum (47) hineinragende Anschlussabschnitte (49.1) aufweisen, an die die Anschlussbereiche (2, 3) des Heizelements (1) anschließbar sind.

## Revendications

1. Dispositif de chauffage (40) pour chauffer un flux de gaz, en particulier un flux de gaz d'échappement,
comprenant un élément de chauffage (1) adapté pour permettre l'échange thermique avec le flux de gaz, dans lequel l'élément de chauffage (1) comprend au moins un élément de résistance (10),
dans lequel l'élément de résistance (10) comprend un corps de base (20) en forme de plaque, en particulier en forme de bande,
dans lequel le corps de base (20) comprend des première et deuxième surfaces opposées (21, 22), s'étendant chacune dans une direction longitudinale et transversale (25, 26) du corps de base (20), et des troisième et quatrième surfaces opposées (23, 24) reliant les première et deuxième surfaces (21, 22) et ayant chacune une surface plus petite que chacune des première et deuxième surfaces (21, 22),
dans lequel l'élément de chauffage (1) comprend des zones de connexion (2, 3) qui peuvent être connectées à une source d'énergie électrique, de telle sorte que l'élément de chauffage (1) peut être chauffé par chauffage par résistance,
**caractérisé**
**en ce que** l'élément de résistance (10) comprend au moins une saillie (30) faisant saillie à partir de la première et/ou de la deuxième surface (21, 22) du corps de base (20) dans une direction de saillie (DP),
**en ce que** la saillie (30) est formée d'un seul tenant à partir du corps de base (20), et en ce que la saillie (30) forme un renfoncement (30.1) qui est en retrait par rapport à la surface (21, 22) opposée à la surface (21, 22) à partir de laquelle la saillie (30) fait saillie.

2. Dispositif de chauffage (40) selon la revendication 1,
**caractérisé en ce que** la saillie (30) est formée à partir du corps de base (20) par un processus de formage, en particulier un processus de formage de tôle, de préférence par emboutissage, plus préférablement par emboutissage ou emboutissage profond, et/ou
**en ce qu'**une épaisseur de matériau (37) de l'élément de résistance (10) dans la région d'une saillie (30) est, au moins en partie, inférieure ou égale à une épaisseur de matériau (27) du corps de base (20).

3. Dispositif de chauffage (40) selon la revendication 1 ou 2,
**caractérisé en ce que** la saillie (30) comprend une ou plusieurs sections de paroi (35.1-35.7) faisant saillie à partir de la surface (21, 22) à partir de laquelle la saillie (30) fait saillie,
et **en ce que** la ou les sections de paroi (35.1-35.7) forment une paroi au moins partiellement périphérique de la saillie (30) au moins
sur un côté de la saillie (30) tourné dans la direction transversale (26) et/ou
sur un côté de la saillie (30) tourné à l'opposé de la direction transversale (26) et/ou
sur un côté de la saillie (30) tourné vers la direction longitudinale (25) et/ou
sur un côté de la saillie (30) tourné à l'opposé de la direction longitudinale (25).

4. Dispositif de chauffage (40) selon la revendication 3,
**caractérisé en ce que** la paroi au moins partiellement périphérique de la saillie (30) comprend une section de paroi latérale (35.1-35.6) qui suit la forme d'un cône tronqué,
dans lequel une section transversale du cône tronqué diminue dans la direction de saillie (DP),
et/ou **en ce que** la paroi au moins partiellement périphérique de la saillie (30) comprend une section de paroi latérale (35.1-35.6) qui suit au moins partiellement la forme d'un dôme sphérique, d'un dôme ellipsoïdal et/ou d'un polygone, en particulier d'un tétraèdre ou d'un hexaèdre, de préférence d'un parallélépipède, plus préférablement d'un cube.

5. Dispositif de chauffage (40) selon la revendication 3 ou 4,
**caractérisé en ce que** la paroi au moins partiellement périphérique de la saillie (30) comprend au moins deux sections de paroi latérales (35.3) qui convergent l'une vers l'autre dans la direction transversale (26) pour former un bord, lequel bord forme un bord arrière (38.2) terminant la saillie (30) dans la direction transversale (26), et/ou
**en ce que** la paroi au moins partiellement périphérique de la saillie (30) comprend au moins deux sections de paroi latérale (35.4) qui convergent l'une vers l'autre dans la direction transversale (26) pour former un bord, lequel bord forme un bord d'attaque (38.1) terminant la saillie (30) dans la direction transversale (26).

6. Dispositif de chauffage (40) selon l'une quelconque des revendications 3 à 5,
**caractérisé en ce que** la ou les sections de paroi (35.1-35.7) comprennent une section de paroi supérieure (35.7) reliée à la paroi au moins partiellement périphérique de la saillie (30),
laquelle section de paroi supérieure (35.7) termine la saillie (30) dans la direction de saillie (DP).

7. Dispositif de chauffage (40) selon l'une quelconque des revendications 1 à 6,
**caractérisé en ce que** l'élément de résistance (10) comprend au moins une saillie (30) faisant saillie à partir de la première surface (21) et au moins une saillie (30) faisant saillie à partir de la deuxième surface (22),
dans lequel, de préférence, l'élément de résistance (10) comprend plusieurs saillies (30) qui, dans la direction longitudinale (25), dépassent alternativement des première et deuxième surfaces (21, 22).

8. Dispositif de chauffage (40) selon l'une quelconque des revendications 1 à 7,
**caractérisé en ce que** l'élément de résistance (10) comprend plusieurs saillies (30) disposées le long de la direction longitudinale (25) formant une première rangée (31.3) de saillies (30),
dans lequel un premier espacement (31.1) dans la direction longitudinale (25) est prévu entre des saillies voisines (30) de la première rangée (31.3),
dans lequel le premier espacement (31.1) est constant le long de la direction longitudinale (25),
ou dans lequel le premier espacement (31.1) varie le long de la direction longitudinale (25) de manière continue ou non continue,
en particulier dans lequel le premier espacement (31.1) diminue ou augmente de manière continue ou non continue depuis les régions d'extrémité (4, 5) vers une région située entre les régions d'extrémité (4, 5), de préférence vers une région centrée entre les régions d'extrémité (4, 5).

9. Dispositif de chauffage (40) selon la revendication 8,
**caractérisé en ce que** l'élément de résistance (10) comprend en outre plusieurs saillies (30) disposées le long de la direction longitudinale (25) formant une deuxième rangée (31.4) de saillies (30),
dans lequel les saillies (30) de la deuxième rangée (31.4) sont espacées des saillies (30) de la première rangée (31.3) par un deuxième espacement (31.2) dans la direction transversale (26),
dans lequel un premier espacement (31.1) dans la direction longitudinale (25) est prévu entre des saillies voisines (30) de la deuxième rangée (31.4),
dans lequel le premier espacement (31.1) est constant le long de la direction longitudinale (25),
ou dans lequel le premier espacement (31.1) varie le long de la direction longitudinale (25) de manière continue ou non continue,
en particulier dans lequel le premier espacement (31.1) diminue ou augmente de manière continue ou non continue depuis les régions d'extrémité (4, 5) vers une région située entre les régions d'extrémité (4, 5), de préférence vers une région centrée entre les régions d'extrémité (4, 5).

10. Dispositif de chauffage (40) selon la revendication 9,
**caractérisé en ce qu'**un décalage (32) dans la direction longitudinale (25) est prévu entre les saillies (30) de la première rangée (31.3) et les saillies voisines correspondantes (30) de la deuxième rangée (31.4),
ce décalage (32) étant constant le long de la direction longitudinale (25),
ou dont le décalage (32) varie de manière continue ou non continue le long de la direction longitudinale (25).

11. Dispositif de chauffage (40) selon l'une quelconque des revendications 1 à 10,
**caractérisé en ce que** l'élément de chauffage (1) comprend plus d'un élément de résistance (10),
**en ce que** les éléments de résistance (10) sont disposés les uns à la suite des autres dans une direction perpendiculaire à la direction transversale (26) et à la direction longitudinale (25),
et **en ce que** les éléments de résistance (10) sont reliés les uns aux autres dans au moins une zone de contact (39) de manière à conduire la chaleur et/ou l'électricité,
dans lequel la connexion entre les éléments de résistance (10) est de préférence formée par une liaison matérielle, en particulier une connexion soudée et/ou brasée,
et/ou dans lequel la connexion est formée par une connexion mécanique, en particulier par une connexion à verrouillage positif et/ou par friction.

12. Dispositif de chauffage (40) selon la revendication 11,
**caractérisé en ce que** la zone de contact (39) est formée entre
une section de paroi (35.1-35.7), en particulier une section de paroi supérieure (35.7), d'une saillie (30) d'un élément de résistance (10) et une section de paroi (35.1-35.7), en particulier une section de paroi supérieure (35.7), d'une saillie (30) d'un élément de résistance voisin (10), et/ou
une section de paroi (35.1-35.7), en particulier une section de paroi supérieure (35.7), d'une saillie (30) d'un élément de résistance (10) et une première surface (21) ou une deuxième surface (22) d'un corps de base (20) d'un élément de résistance voisin (10).

13. Dispositif de chauffage (40) selon l'une quelconque des revendications 1 à 12,
**caractérisé en ce que** l'élément de chauffage (1) comprend au moins un autre élément de résistance (11) qui ne comprend pas de saillies (30),
dans lequel un corps de base (12) de l'autre élément de résistance (11) est plat,
ou dans lequel le corps de base (12) de l'autre élément de résistance (11) est ondulé et présente des sections en forme de vallées (13) et des sections en forme de crêtes (15) alternant de préférence dans la direction longitudinale (25),
**en ce que** l'élément de résistance (10) et l'autre élément de résistance (11) sont disposés l'un à la suite de l'autre dans une direction perpendiculaire à la direction transversale (26) et à la direction longitudinale (25),
et **en ce que** l'élément de résistance (10) est relié à l'autre élément de résistance (11) dans au moins une zone de contact (39) de manière à conduire la chaleur et/ou l'électricité,
la liaison entre l'élément de résistance (10) et l'autre élément de résistance (11) étant de préférence formée par une liaison matérielle, en particulier une liaison soudée et/ou brasée.

14. Dispositif de chauffage (40) selon l'une quelconque des revendications 1 à 13,
**caractérisé en ce qu'**un boîtier (41) est prévu,
**en ce que** le boîtier (41) comprend une paroi périphérique (42) entourant partiellement un espace de réception (47),
dans lequel (47) peut recevoir l'élément de chauffage (1),
dans lequel l'espace de réception (47) est au moins partiellement ouvert dans et contre la direction transversale (26) de l'élément de chauffage (1) pouvant y être reçu, de telle sorte qu'un passage (44) pour l'écoulement de gaz est formé,
dans lequel de préférence une structure de support (43) est prévue pour supporter l'élément de chauffage (1) dans l'espace de réception (47),
laquelle structure de support (43) est reliée directement ou indirectement à la paroi périphérique (42) et s'étend au moins partiellement à travers le passage (44),
et dans lequel, de préférence, des connecteurs (48) sont prévus,
lesdits connecteurs (48) comprenant des sections de connexion (49.2) qui s'étendent vers l'extérieur de l'espace de réception (47) et peuvent être connectées à la source d'alimentation électrique,
lesdits connecteurs (48) comprenant en outre des premières sections de connexion (49.1) s'étendant dans l'espace de réception (47), auxquelles les zones de connexion (2, 3) de l'élément de chauffage (1) peuvent être connectées.
